Europäisches Patentamt

European Patent Office

Office européen des brevets

(11) Veröffentlichungsnummer: **0 264 537**
A1

(12) # EUROPÄISCHE PATENTANMELDUNG

(21) Anmeldenummer: **87107691.5**

(22) Anmeldetag: **26.05.87**

(51) Int. Cl.³: **B 23 Q 11/00**

(30) Priorität: **10.10.86 IT 2196786**

(43) Veröffentlichungstag der Anmeldung:
**27.04.88 Patentblatt 88/17**

(84) Benannte Vertragsstaaten:
**CH DE ES FR GB LI SE**

(71) Anmelder: **Sachman S.p.A.**

**Reggio Emilia(IT)**

(72) Erfinder: **Calcopietro, Vincenzo**
**Via Accursio da Reggio, 23**
**I-42100 Reggio Emilia(IT)**

(74) Vertreter: **Mayer, Hans Benno**
**Via dell'Orso 7/A**
**I-20121 Milano(IT)**

(54) **Vorrichtung zum Ausgleich von Waermedehnungen im Schlitten einer Werkzeugmaschine.**

(57) Die Erfindung betrifft eine Vorrichtung zum Ausgleich von Waermedehnungen, die im Schlitten einer Werkzeugmaschine auftreten. Dabei ist vorgesehen, dass mit der Vorderseite eines Maschinenschlittens, der eine Spindel aufnimmt und mit einem Bearbeitungskopf verbunden ist, der gesteuert im Raum bewegbar ist, eine Uebertragungsstange verbunden ist, die mit einer Schwenkvorrichtung zusammenarbeite, die nach Art eines Pendels verschwenkbar angeordnet ist und deren freies Ende mit einer linearen Messeinrichtung (optische Leiste) verbunden ist. Es ist vorgesehen, dass die zwei Verbindungsstellen der Betaetigungsstange in der Hoehe verschiebbar angeordnet sind, um somit an den Schwenkpunkt der Schwenkvorrichtung genaehert oder von diesem entfernt zu werden.

EP 0 264 537 A1

./...

Fig. 1

Sachman S.p.A

Reggio Emilia

Italien


"Vorrichtung zum Ausgleich von Waermedehnungen im Schlitten einer

Werkzeugmaschine"


Die vorstehende Erfindung betrifft eine Vorrichtung zum Ausgleich der Waermedehnung, die im Schlitten einer Werkzeugmaschine, besonders einer Fraesmaschine, auftritt.

Es ist bekannt, dass Fraesmaschinen, besonders Fraesmaschinen mit feststehendem Staender, einen Schlitten aufweisen, der in einer horizontalen Ebene verschiebbar gelagert ist.

Dieser Schlitten ist so ausgebildet, dass er die Montage eines Werkzeugkopfes erlaubt, der mit einer motorisch angetriebenen Spindel verbindbar ist, wobei die Spindel im Inneren des Schlittens vorgesehen ist.

Es ist auch bekannt, dass derartige Maschinen ueblicherweise durch eine NC-Einrichtung numerisch gesteuert werden. Um Waermeausdehnungen auszugleichen, denen der Schlitten aufgrund zunehmender Waermentwicklung im Inneren der Maschine waehrend des Bearbeitungsvorganges ausgesetzt ist, ist der Werkzeugkopf z.B. mit einer Stange verbunden, die wiederum mit einer linearen Messeinrichtung wirkverbunden ist, die z.B. aus einer optischen Leiste besteht, die mit einer Leseeinrichtung oder einem Verschiebeteil zusammenarbeitet, welches die genaue Lage der optischen Leiste und somit die Lage des Fraeskopfes feststellt und ermoeglicht, einen Ausgleich der auftretenden Waermedehnung im Schlitten vorzunehmen.

Eine bekannte Ausgleichsvorrichtung dieser Art kann aber nur dann Verwendung finden, wenn der Schlitten mit einem fest angeordneten Fraeskopf ausgeruestet wird. In diesem Fall ist es moeglich, das lineare Messgeraet direkt an den Werkzeugkopf anzukuppeln, z.B. in der Naehe der Vorderseite des Kopfes. Zu diesem Zweck, findet z.B. eine Uebertragungsstange Einsatz, die aehnlich einer Verlaengerung aus dem Schlitten herausragt und an der Vorderseite des fest angeordneten Kopfes angeordnet ist.

Diese bekannte Vorrichtung zum Ausgleich von Waermedehnungen, die im Schlitten einer Werkzeugmaschine auftreten, kann aber dann nicht Verwendung finden, wenn der eingesetzte Werkzeugkopf eine Bewegung im Raum ausfuehrt, d.h. wenn der Kopf entlang der drei Koordinaten X, Y, Z bewegbar ist. In diesem Fall besteht keine Moeglichkeit, die lineare Mess- und Ableseeinrichtung direkt an der Vorderseite des Kopfes anzukuppeln.

Es ist deshalb Aufgabe der vorstehenden Erfindung, eine Vorrichtung zum Ausgleich der Waermedehnung im Schlitten einer Werkzeugmaschine zu finden, besonders fuer eine Fraesmaschine, mit welcher Vorrichtung es moeglich ist, die Nachteile des Standes der Technik zu vermeiden und eine Vorrichtung vorzuschlagen, die auch im Falle der Verwendung eines im Raum beweglichen Werkzeugkopfes die Moeglichkeit eroeffnet, mit Genauigkeit einen Ausgleich der Waermedehnung im Schlitten und im Werkzeugkopf vorzunehmen, wodurch die Moeglichkeit geschaffen wird, auch fuer Werkzeugkoepfe, die im Raum beweglich sind, Arbeiten mit groesster Praezision und Wiederholbarkeit durchzufuehren.

Eine weitere Aufgabe der Erfindung besteht darin, eine Ausgleichsvorrichtung zu schaffen, die an verschiedene Werkzeugkoepfe einfach anpassbar ist, auch wenn diese unterschiedliche thermische Ausdehnungskoeffizienten besitzen.

Die erfindungsgemaessen Aufgaben werden durch die Neuerung dadurch geloest, dass die Vorderseite des Maschinenschlittens, die zur Aufnahme des Werkzeugkopfes dient, eine schlittenartige Vorrichtung aufnimmt, die laengs Fuehrungsbahnen verschiebbar angeordnet ist, dass mit dieser schlittenartigen Vorrichtung, spielfrei das eine Ende einer Uebertragungsstange verbunden ist, deren weiteres Ende mit einer zweiten schlittenartigen Vorrichtung verbunden ist, die ebenfalls laengs Fuehrungsbahnen verschiebbar angeordnet ist und Bestandteil einer Schwenkvorrichtung ist, dass mit dieser Schwenkvorrichtung ein Ende einer an sich bekannten Linearmesseinrichtung wirkbunden ist, die dem Maschinenschlitten zugeordnet ist und dass ein Ende der Schwenkvorrichtung mit dem Maschinenschlitten derart verbunden ist, dass eine spielfreie Schwenkbewegung durchfuehrbar ist.

Mit einer Vorrichtung dieser Art wird ein Ausgleich der thermischen Laengendehnung auch fuer jene Koepfe ermoeglicht, die eine orbitale Bewegung durchfuehren, d.h. eine Bewegung im Raum. Durch Aendern des Abstandes der genannten Uebertragungsstange gegenueber dem Schwenkpunkt (23) wird es moeglich, auch das Uebertragungsverhaeltnis und somit die Weite der Schwenkbewegung der Vorrichtung, die mit der Linearmesseinheit verbunden ist, zu beeinflussen, d.h.: je mehr die Uebertragungsstange an den Schwenkpunkt herangefuehrt ist, desto ausgepraegter wird die Bewegung sein, die auf das optische Mess- und Lesesystem einwirkt. Je mehr die Uebertragungsstange aber vom Schwenkpunkt erntfernt ist, umso weniger ausgepraegt wird die Verschwenkbewegung sein, die auf die Stange oder die Messleiste einwirkt (veraenderbare Verstaerkung der Schwenkbewegung).

Die erfindungsgemaesse Aufgabe wird nun genauer beschrieben und anhand eines Ausfuehrungsbeispieles in den Zeichnungen dargestellt. Es zeigen:

Fig. 1 eine Vorderansicht, teilweise im Schnitt, der Ausgleichsvorrichtung gemaess der Erfindung;

Fig. 2 einen Schnitt entlang der Linie II-II der Fig. 1;

Fig. 3 eine Draufsicht der Ausgleichsvorrichtung gemaess dem Pfeil III-III der Fig. 1;

Fig. 4 schematisch die Funktionsweise der erfindungsgemaessen Ausgleichsvorrichtungen.

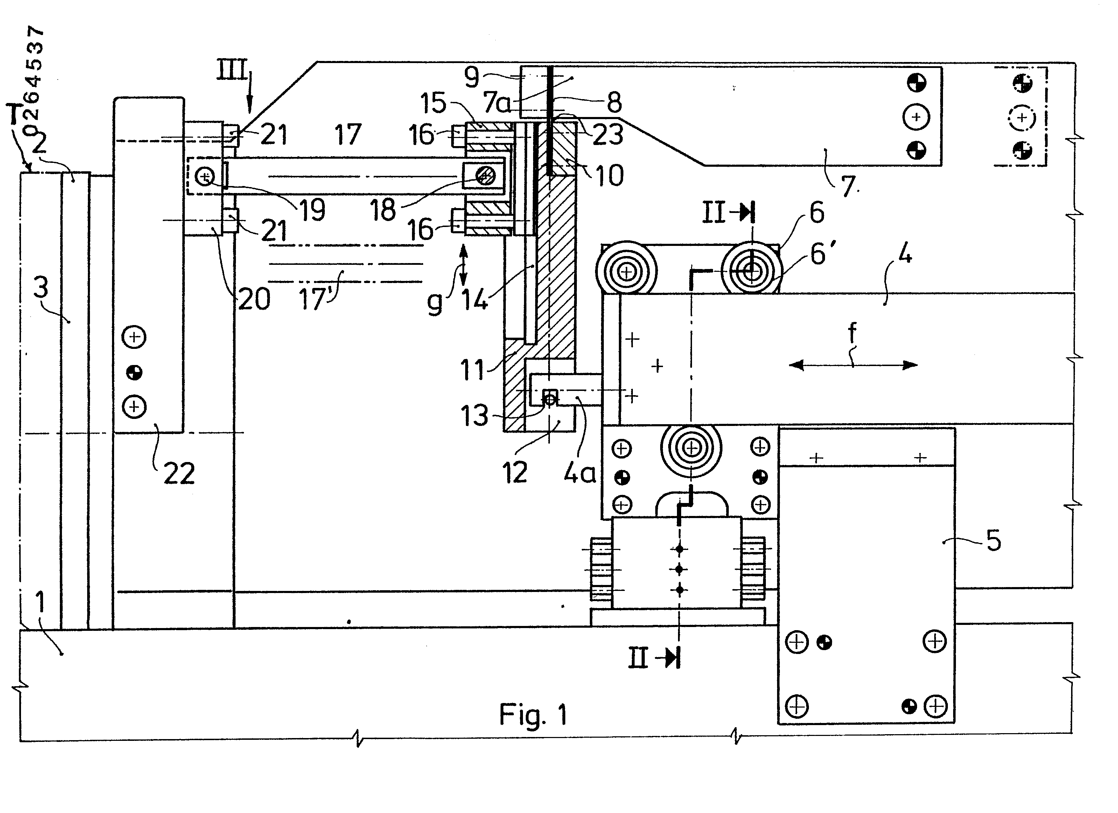

Wie der Fig. 1 zu entnehmen ist, nimmt der fest angeordnete Staender 1 der Maschine einen verschiebbaren Schlitten 2 auf, an dessen Vorderseite 3 ein Bearbeitungskopf T, der nur schematisch

0264537

mit Strichpunktlinien dargestellt ist, angebracht ist. Dieser Kopf T ist in ueblicher Weise mit einer bekannten Antriebsspindel verbindbar, die im Inneren des Schlittens angeordnet ist und nicht genauer dargestellt ist.

In an sich bekannter Weise, weist der Schlitten 2 eine Leiste 4 auf, die Bestandteil einer linearen Messeinrichtung ist und mit einer Leseeinrichtung oder einem sogenannten Slider, der mit 5 bezeichnet ist, ausgeruestet ist.

Messeinrichtungen dieser Art sind allgemein bekannt und beduerfen keiner weiteren Beschreibung.

Die Leiste 5 des linearen Messsystems ist in Richtung des Pfeiles (f) verschiebbar durch Lager aufgenommen, die gesamthaft mit 6 gekennzeichnet sind. Die Lager weisen Laufrollen 6' auf, die in Laengsrichtung des Maschinenschlittens angeordnet sind. Die Leseeinrichtung oder der Slider 5 sind fest am Gestell 1 der Maschine angeordnet. Das obere Teilstueck des Schlittens 2 nimmt einen Lagerarm 7 auf, der sich im wesentlichen in Laengsrichtung des Schlittens 2 erstreckt.

An seinem freien Ende 7a nimmt der Lagerarm 7 ein Blech 8 auf, das im wesentlichen in vertikaler Anordnung vorgesehen ist, und mittels einer Verdickung 9 montiert ist und z.B. mit Schrauben oder aehnlichen Befestigungsmitteln festgespannt wird.

Das untere Ende des Bleches, das in vorteilhafter Weise in Federstahl ausgefuehrt ist, wird fest mit einem blockartigen Gebilde 10, z.B. unter Zuhilfenahme von nicht dargestellten Schrauben, mit einer Schwenkvorrichtung verbunden, die gesamthaft mit 11 gekennzeichnet ist. Die Schwenkvorrichtung 11 ist in der Lage, eine geringe Schwenkbewegung nach Art eines Pendels um den nicht festgespannte Teil des Federstahbleches 8 durchzufuehren. Diese freie Zone 23, die zwischen dem Haltearm 7 und dem Oberteil der Schwenkeinrichtung 11 angeordnet ist, bildet einen spielfreien Schwenkpunkt 23.

An der Unterseite weist die Schwenkvorrichtung 11 eine Ausnehmung 12 auf in der, unter Zuhilfenahme eines Querstiftes 13, das vordere Teilstueck 4a der Leiste 4 des linearen Messsystems angehaengt wird. Auf der Vorderseite weist die Schwenkvorrichtung 11 parallele Fuehrungen 14 oder aehnliche Mittel auf, die eine kleine schlittenartige Einrichtung 15 aufnehmen, die nach Loesen von Spannschrauben 16, nach oben oder nach unten verschoben werden kann (Pfeil g). Die schlittenartige Vorrichtung 15 ist fest mit einer Uebertagungsstange 17 verbunden, die mit der schlittenartigen Einrichtung 15 unter Zuhilfenahme eines Querstifts 18, in vorteilhafter Weise eines Praezisionspassstiftes verbunden ist. Das andere Ende der Uebertragungsstange 17 ist ebenfalls unter Verwendung eines Praezisionspassstiftes 19 mit einer zweiten schlittenartigen Vorrichtung 20 verbunden. Auch der Schlitten 20 ist in der Hoehe verschiebbar (Pfeil g), wenn entsprechende Schrauben 21 geloest werden. Die schlittenartige Vorrichtung 20 wird von einer Halterung 22 aufgenommen, die mit dem Schlitten 2 verbunden ist. Durch die Vorsehung von zwei schlittenartigen Vorrichtungen 15 und 20, die in Richtung des Pfeiles (g) verschiebbar angeordnet sind, wird es ermoeglicht, die Uebertragungsstange 17 von der mit vollen Linien dargestellten Stellung (17) in die mit Strichpunktlinien dargestellte Stellung 17' zu verschieben. Dadurch kann der Angriffspunkt der Stange 17 gegenueber der Schwenkvorrichtung 14 veraendert werden, d.h. die Stange 17 kann mehr oder weniger nahe am Schwenkpunkt 23, der durch das freie Federstahlstueck 8 zwischen dem Haltearm 7 und der Schwenkvorrichtung 11 gebildet wird, angeordnet sein.

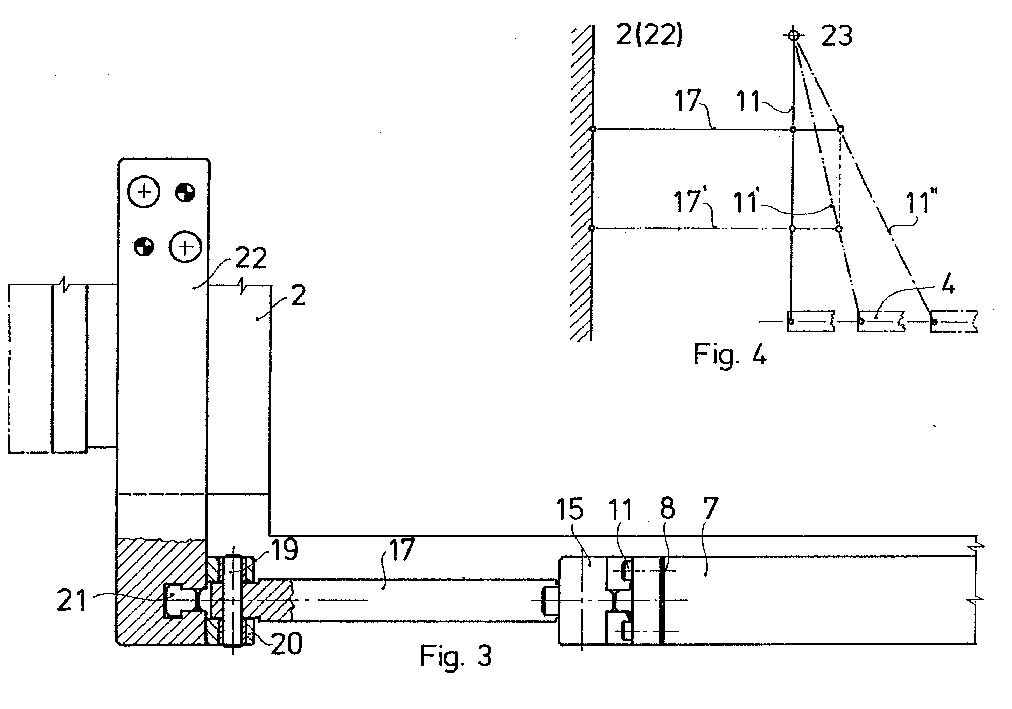

Daraus folgt, wie der Fig. 4 zu entnehmen ist, dass die Weite der Schwenkbewegung der Schwenkvorrichtung 17 einstellbar ist und eine mehr oder weniger weite Schwenkbewegung der Leiste 4 bei bestimmten Laengendehnungen erzielbar ist.

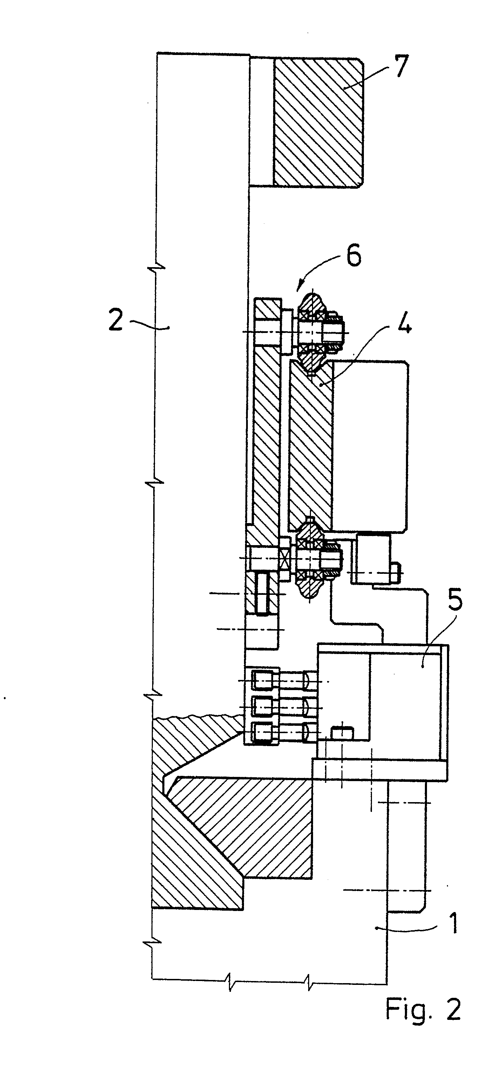

In Fig. 2 ist die rechte Seite des Maschinenschlittens 2 dargestellt und der Schlitten ist in Gleitfuehrungen verschiebbar, die in den festen Maschinenstaender 1 der Maschine eingearbeitet sind. Neben dem mit dem Maschinenschlitten 2 verbundenen Arm 7, kann der Fig. 2 entnommen werden, dass der Support 6 mit Gleitrollen 6 ausgeruestet ist, die in eigens dafuer vorgesehene Nuten abrollen, Nuten die z.B. in die optische Leseleiste 4 eingearbeitet sind. Der optischen Leseleiste 4, wie dies bereits vorher erwaehnt wurde, ist ein sogenannter Slider oder eine anders ausgebildete Leseeinrichtung 5 zugeordnet, die an der starren Struktur 1 der Maschine befestigt ist.

Der Fig. 3 kann in einer Draufsicht die Darstellung des Supports 22 entnommen werden, der fest mit dem Maschinenschlitten 2 verbunden ist. Ferner zeigt die Fig. 3 im Schnitt den Schlitten 20, der loesbar, bzw. blockierbar durch Schrauben 21 montiert ist. In vorteilhafter Weise weisen die Schrauben hammerartige Koepfe auf, die in geeigneten Fuehrungen laufen. Dadurch wird es ermoeglicht, den Schlitten 22 gegenueber dem Support zu verschieben und einzustellen.

Mit einem Praezisionspassstift 19 ist die Uebertragungsstange 17 spielfrei mit dem Schlitten 20 verbunden. Das andere Ende der Stange 17 ist mit dem Schlitten 15 verbunden. Durch Loesen der Spannschrauben 16 kann auch der Schlitten 15 gegenueber der Schwenkvorrichtung 11 verschoben werden. Die Schwenkvorrichtung ist mit dem Haltearm 7 unter Zwischenschaltung des Bleches 8, das den Schwenkpunkt 23 bildet, verbunden.

Die Arbeitsweise der erfindungsgemaessen Vorrichtung wird nun genauer anhand der schematischen Darstellung gemaess Fig. 4 beschrieben.

Beruecksichtigt man, dass die Uebertragungsstange 17 mit dem vorderen Ende des Maschinenschlittens 2 verbunden ist, bzw. mit dem Support 22, der mit dem Maschinenschlitten wirkverbunden ist, so waere es in der Praxis nicht moeglich, einen Ausgleich der Waermedehnung auch fuer Fraes- und Bohrkoepfe durchzufuehren, die am Flansch des Maschinenschlittens 2 angeordnet sind und mit einer Orbitalbewegung im Raum bewegt werden. Es waere auch unmoeglich, einen Waermeausdehnungsausgleich ohne besondere Vorkehrungen durchzufuehren, z.B. die Waermeausdehnung des Fraeskopfes bei Arbeiten mit niederiger Drehzahl der Spindel (weniger starkes Erwaermen der Baugruppen) oder bei Arbeiten mit hoher Spindeldrehzahl (hoehere Waermeentwicklung im Schlitten).

Der Erfinder hat aber erkannt, dass es in der Werkstatt moeglich ist, fuer jeden Fraeskopf, sowie fuer jeden Bearbeitungsvorgang (niedrigtourig, hochtourig) und somit fuer jeden Maschinentyp, das Ausmass der thermischen Laengenaenderung fuer den dentsprechenden Kopf, der am Flansch 3 des Schlittens 2 montiert ist, festzustellen.

Diese Waermedehnungen koennen z.B. in der Werkstatt gemessen werden. Dadurch ist es moeglich, unter Verwendung der erfindungsgemaessen Vorrichtung verschiedene Kompensationsgrade ueber verschiedene Verstaerkungsverhaeltnisse durch die vorgeschlagene Vorrichtung vorzunehmen.

Je mehr die Stange 17 in der Naehe des Schwenkpunktes 23 angeordnet ist, umso groesser wird der Ausschlag der Schwenkbewegung sein, und umso groesser wird die Bewegung in Richtung des Pfeiles (f) sein, die durch die Schwenkvorrichtung auf die optische Leiste bei thermischer Laengenaenderung uebertragen wird. Je mehr die Uebertragungsstange 17' jedoch vom Schwenkpunkt 23 entfernt angeordnet ist, umso geringer wird der Schwenkwinkel sein und umso geringer wird die auf die optische Leiste 4 uebertragene Verschiebebewegung sein.

## Patentansprueche

1. Vorrichtung zum Ausgleich von Waermedehnungen im Schlitten und im Fraeskopf einer Werkzeugmaschine, wobei der Schlitten an seiner Vorderseite einen Werkzeugkopf aufweist, dadurch gekennzeichnet, dass die Vorderseite des Maschinenschlittens (2) eine schlittenartige Vorrichtung (20) aufnimmt, die entlang Fuehrungsbahnen verschiebbar (21) angeordnet ist, dass mit dieser schlittenartigen Vorrichtung (20) spielfrei das eine Ende (19) einer Uebertragungsstange (17) verbunden ist, deren weiteres Ende (18) mit einer zweiten schlittenartigen Vorrichtung (15) verbunden ist, die ebenfalls laengs Fuehrungsbahnen (14) verschiebbar ist und die Bestandteil einer Schwenkvorrichtung (11) ist, dass mit dieser Schwenkvorrichtung (11) ein Ende (4a) einer an sich bekannten Linearmesseinrichtung (4) wirkverbunden ist, die dem Maschinenschlitten (2) zugeordnet ist und dass ein Ende der Schwenkvorrichtung (11) mit dem Maschinenschlitten (2) derart verbunden ist, dass eine spielfreie (23) Schwenkbewegung durchfuehrbar ist.

2. Vorrichtung, nach Patentanspruch 1, dadurch gekennzeichnet, dass mit dem Lagerarm (7) und der Schwenkvorrichtung (11) ein Blech (8) verbunden ist, das in vorteilhafter Weise als Federstahlblech ausgefuehrt ist und einen Schwenkpunkt (23) bildet.

3. Vorrichtung, nach Patentanspruch 1, dadurch gekennzeichnet, dass die Schwenkvorrichtung (11) eine Ausnehmung (12) aufweist, in der unter Zuhilfenahme eines Querstiftes (13) das vordere Ende (4a) einer optischen Leiste (4) einer linearen Messeinrichtung (5) angehaengt ist.

4. Vorrichtung, nach Patentanspruch 1, **dadurch gekennzeichnet,** dass die Enden (19, 18) der Uebertragungsstange (17) durch Querstifte (18, 19) spielfrei mit den schlittenartigen Vorrichtungen (20, 15), die laengs der Fuehrungen (14) verschiebbar sind, verbunden sind.

Fig. 1

43

0264537

Fig. 2

3/3

Fig. 4

Fig. 3

Europäisches
Patentamt

EUROPÄISCHER RECHERCHENBERICHT

Nummer der Anmeldung
0264537

EP 87 10 7691

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 320 529 (MIKRON) --- | 1,2 | B 23 Q 11/00 |
| A | FR-A-2 129 986 (RATIER) --- | | |
| A | EP-A-0 126 888 (HEIDENHAIN) ----- | | |

RECHERCHIERTE SACHGEBIETE (Int. Cl.4)

B 23 Q

Der vorliegende Recherchenbericht wurde für alle Patentansprüche erstellt

| Recherchenort | Abschlußdatum der Recherche | Prüfer |
|---|---|---|
| DEN HAAG | 14-01-1988 | DE GUSSEM J.L. |